# EUROPÄISCHE PATENTSCHRIFT

(11) **EP 0 816 717 B1**
(45) Veröffentlichungstag und Bekanntmachung des Hinweises auf die Patenterteilung: **02.10.2002**
(21) Anmeldenummer: 97890120.5
(22) Anmeldetag: 02.07.1997
(51) Int. Cl.: F16H 55/30, F16G 13/12, F16H 7/06, F16G 13/02

(54) **Kettentrieb mit Profilstahlkette**
Chain drive with sectional steel chain
Dispositif d'entraînement par chaîne en acier profilé

(30) Priorität: 03.07.1996 AT 117996
(43) Veröffentlichungstag der Anmeldung: 07.01.1998
(73) Patentinhaber: PEWAG AUSTRIA GmbH, A-8010 Graz (AT)
(72) Erfinder: Walenta, Gerhard, Dr., 8020 Graz (AT); Fuchs, Franz, 8605 Kapfenberg (AT)
(74) Vertreter: Matschnig, Franz, Dipl.-Ing.

(56) Entgegenhaltungen:
- DE-A- 3 929 148
- DE-A- 3 942 928
- DE-A- 19 514 792
- GB-A- 759 429
- US-A- 2 075 524
- US-A- 2 199 688
- US-A- 3 376 756

## Beschreibung

Die Erfindung bezieht sich auf ein Kettenrad, auf die Verwendung einer Kette in einem Kettenrad sowie auf einen Kettentrieb gemäß den Oberbegriffen der unabhängigen Ansprüche 1, 2 und 8.

Für Kettentriebe, z.B. bei elektrisch oder pneumatisch betriebenen Hebezeugen oder bei Förderanlagen werden Rundstahlketten zusammen mit Taschenrädern verwendet. Ein für solche Zwecke geeignetes Taschenrad findet sich in der GB 1 198 473 A. Wie aus Fig. 1 dieses Dokumentes hervorgeht, liegen sowohl die stehenden als auch die liegenden Glieder nur in wenigen Bereichen auf dem Kettenrad auf, nämlich die liegenden Glieder nur mit ihren Bugen an den Zahnflanken und die stehenden Glieder im Übergangsbereich zwischen ihren Bugen und Schenkeln am Boden einer Rille. Es erfolgt somit eine vorwiegend linienförmige Berührung, die mit einer hohen spezifischen Auflagepressung einhergeht.

Eine solche hohe Auflagepressung tritt auch auf, wenn der Boden der Taschen plan ausgebildet wird, da die Rundstahlglieder dort nur linienförmig aufliegen, sodaß es im Betrieb durch Abnutzung zu einer Muldenbildung kommt.

Die EP 269 557 A zeigt ein Kettenrad für Rundstahlketten, bei dem, ebenso wie bei dem zuvor. genannten Dokument, auf eine Abstützung der liegenden Glieder am Taschenboden verzichtet wird und besonderes Augenmerk auf eine konkave Abrundung im Übergangsbereich der Zahnflanken und dem Taschenboden gerichtet wird, um wenigstens einen kleinen, flächenhaften Abstützbereich zu erhalten.

Die DE 39 29 148 A1 zeigt eine Profilkette, bei welcher eine vollkommene Anpassung der Rundung des Bugquerschnittes an die innere Kettengliedrundung gefordert wird. In der Praxis zeigt sich jedoch, daß hierdurch bereits bei geringer Last ein Verklemmen des Kettengliedes mit hohem Verschleiß auftritt.

Bei dem in der EP 530 935 A1 dargestellten Kettenrad für eine Rundstahlkette wird davon ausgegangen, daß die Stützflächen des Kettenrades aus verhältnismäßig weichem Material bestehen, sodaß sich die Kettenglieder bald in die Stützflächen "einbetten" können. Es liegt auf der Hand, daß derartig weiche Stützflächen letztlich auch zu einem raschen Verschleiß des Kettenrades führen.

Der US 4,792,323 A ist ein Gehäuse für einen Kettentrieb zu entnehmen, das zwecks Kosteneinsparung aus Blech hergestellt ist, wobei jedoch nicht auf eine gute, nämlich flächige Führung der Kette geachtet wird.

Die US 2,075,524 A hat ein Kettenrad für Rundstahlketten zum Inhalt. Dieses Dokument wurde zur Abgrenzung der Ansprüche 1, 2 und 8 benutzt. Gegenstand dieser Druckschrift ist eine mechanische Verstellungsmöglichkeit der ebenen Auflageflächen für die liegenden Kettenglieder, um Teilungsverlängerungen der Kette, die z.B. durch Verschleiß oder Korrosion auftreten, auszugleichen. Jedoch ist bei diesem Kettenrad nicht vorgesehen, dass die liegenden Glieder sich an den Zähnen abstützen - diese wäre auch im Hinblick auf die Variabilität der Auflageflächen, die ja unmittelbar eine entsprechende Variabilität der Größe der Taschen zwischen den Zähnen bedingt, kaum realisierbar. Die Herstellung der Kettenräder mit einer mechanischen Verstellmöglichkeit wie in der US 2,075,524 vorgeschlagen ist naturgemäß technisch sehr aufwendig und somit sehr teuer. Weiteres besitzt das Kettenrad keine ebenen Auflageflächen fiir die stehenden Kettenglieder und ist somit fiir den Lauf mit Profilketten nicht geeignet.

In der US 2,199,688 A ist ein Kettenrad für Rundstahlketten offenbart, in dem jedoch die Auflageflächen für die liegenden Kettenglieder nicht plan sind, was das Ausmaß der Berührung stark einschränkt und zu einer hohen Beanspruchung der Kettenglieder führt. Überdies ist für die stehenden Kettenglieder keine Auflagemöglichkeit vorgesehen, weshalb dieses Kettenrad für Profilketten nicht geeignet ist.

In der GB 759,429 A ist eine Kette offenbart, welche einen Profilquerschnitt besitzt, der im äußeren eckigen Teil des Drahtquerschnittes substantiell schmäler als im Bereich der zum Gliedinneren anschließenden Rundung ist. Diese Querschnittsform zieht nach sich, dass für das Kettenrad teure Fräsvorgänge notwendig sind, um wiederum plane Berührungsflächen (zur Herabsetzung der Flächenpressung) zwischen Kette und Kettenradtaschen zu erreichen. Des weiteren ist eine großflächige Berührung derartiger Kettenglieder mit einer planen Auflagefläche nicht möglich. Diese Kette unterscheidet sich daher deutlich von den erfindungsgemäßen Lösungen und kann auch die der Erfindung zugrunde liegende Aufgabe nicht lösen.

Allen bekannten Lösungen ist gemeinsam, daß eine unerwünscht hohe Beanspruchung der Kettenglieder auftritt, die zu hoher Abnutzung und/oder Bruch führen kann. Dem kann nun durch entsprechend großzügige Dimensionierung und Wahl teurer Werkstoffe entgegengewirkt werden.

Die DE 39 29 148 A1 hat eine schubsteife Triebstockkette zum Inhalt, insbesondere für den Vorschub von Schrämmaschinen u.dgl. Die Kette besteht aus zwei verschiedenen Kettengliedarten, nämlich Langglieder 1 und Kurzglieder 2. Die Kurzglieder besitzen nur im Bug einen der erfindungsgemäßen Profilstahlkette ähnlichen Querschnitt. Die an die Buge anschließenden Schenkel sind jedoch nicht gerade. Die Kurzglieder besitzen veränderliche Querschnitte, Distanznocken 6 und Distanzstege 9,11, sodass sie nicht aus einem Walzdraht herstellbar sind.

Die Kette nach dieser Druckschrift besteht aus zwei verschiedenen Kettengliedarten und kann auch nicht in einem Fertigungsgang hergestellt werden. Dies zieht eine sehr teure Kettenfertigung nach sich. Es sei jedoch hervorgehoben, dass die Erfindung sich auf eine Kette richtet, welche nur aus einer Kettengliedart besteht und in einfacher Weise aus einem Walzdraht mit konstantem Querschnitt gefertigt werden kann.

Die US 3,376,756 A zeigt einen Kettentrieb mit einer Rundstahlkette und keiner Profilkette, mit dem eine Untersetzung eines Kurbelmomentes erreicht wird. Der Kettentrieb besteht aus einem Kettenrad, gelagert auf einer Exzenterwelle, einer Rundstahlkette und einer Kettenführung. Die Kettenführung besitzt formschlüssige Ausnehmungen für die Kette. Das Kettenrad nach dieser Druckschrift ist am Exzenter der Welle gleitend gelagert; es führt eine gegenläufige Drehbewegung zur Exzenterwelle aus und stützt sich dabei wechselweise an den Fortsätzen 16 und - formschlüssig über die Kette - an den Nasen 11,62 der Kettenführung ab. Das Kettenrad führt zusätzlich eine oszillierende Bewegung aus, weil es am Exzenter gelagert ist. Aufgrund des oszillierenden Laufes des Kettenrades ist der Kettentrieb nur für sehr langsamen Kettenlauf geeignet. Des weiteren besitztdas Kettenrad keine ebenen Auflageflächen für die stehenden Kettenglieder und ist somit für den Lauf mit Profilketten nicht geeignet. Die Funktionsweise des Kettentriebs der US 3,376,756 A unterscheidet sich durch die Abstützung des Kettenrades an einer äußeren Kettenführung, insbesondere an Führungsnasen einer solchen Kettenführung, grundlegend von Kettentrieben der der Anmeldung zugrunde liegenden Art.

Es ist eine Aufgabe der Erfindung, ein Kettenrad, eine Kette und einen Kettentrieb zu schaffen, und die Verwendung einer Kette in einem Kettenrad zu verbessern, wobei den oben genannten Nachteilen entgegengewirkt werden soll.

Diese Aufgabe wird mit einem Kettenrad nach Anspruch 1 gelöst.

Für ein solches Kettenrad sieht die Erfindung weiters die Verwendung nach Anspruch 2 mit einem Kettenrad und einer Kette mit ovalen, im Einsatz gegeneinander abwechselnd um 90° verdrehten Gliedern vor, bei welcher erfindungsgemäß der Drahtquerschnitt der Kettenglieder ein Rechteck mit einer daran zum Gliedinneren hin anschließenden Rundung ist, und das Kettenrad plane Auflageflächen aufweist.

Die Aufgabe der Erfindung wird demgemäß auch mit einem Kettentrieb nach Anspruch 8 gelöst.

Die Erfindung geht somit bewußt von herkömmlichen Rundstahlketten zu sogenannten Profilstahlketten über, die als solche für den Einsatz als Zugketten, z.B. in der Forstwirtschaft oder auch bei Schneeketten bekannt sind.

Dank der Erfindung ist eine über weite Bereiche ebenflächige Abstützung der liegenden Kettenglieder auf dem Taschenboden möglich, was zu einer geringeren Flächenpressung führt. Auch das stehende Glied kann nun flächig abgestützt werden, ohne daß man durch einen teuren Profilfräsvorgang den Rillenboden bearbeiten müßte - was fiir eine flächige Abstützung bei Rundstahlketten erforderlich wäre. Bei Verwendung einer Kettenführung wird diese geringeren Kräften ausgesetzt, da sowohl die stehenden als auch die liegenden Glieder bereits im Kettenrad besser gehalten sind. Die Herstellung des Kettenrades ist gegenüber bekannten Kettenrädern mit gerundetem Übergangsbereich zwischen Zahnflanken und Taschenböden billiger, da auch der Taschenboden z.B. mit Hilfe eines einfachen Schaftfräsers herstellbar ist.

Weitere Merkmale der Erfindung sind in den abhängigen Ansprüchen gekennzeichnet.

Die Erfindung samt anderer Vorteile ist im folgenden anhand beispielsweiser Ausführungsformen näher erläutert, die in der Zeichnung veranschaulicht ist. In dieser zeigen
- Fig. 1: einen Vertikalschnitt durch einen erfindungsgemäßen Kettentrieb in der Mittenebene des Kettenrades längs der Linie I-I der Fig. 3,
- Fig. 2: einen Schnitt längs der Linie II-II der Fig. 1,
- Fig. 3: einen Schnitt längs der Linie III-III der Fig. 1 bei weggelassener Kette,
- Fig. 4: eine Profilstahlkette, teilweise geschnitten,
- Fig. 5: einen 90°-Sektor des Kettenrades aus Fig. 1 in gleicher Ansicht wie Fig. 1,
- Fig. 6: eine Ansicht in Richtung des Pfeiles VI der Fig. 5,
- Fig. 7: einen Schnitt längs der Linie VII-VII der Fig. 5 und
- Fig. 8: einen Schnitt längs der Linie VIII-VIII der Fig. 5,
- Fig. 9: ein Detail aus Fig. 1 in etwas größerer Darstellung und
- Fig. 10: in weiter vergrößerter Darstellung ein Detail aus Fig. 4.

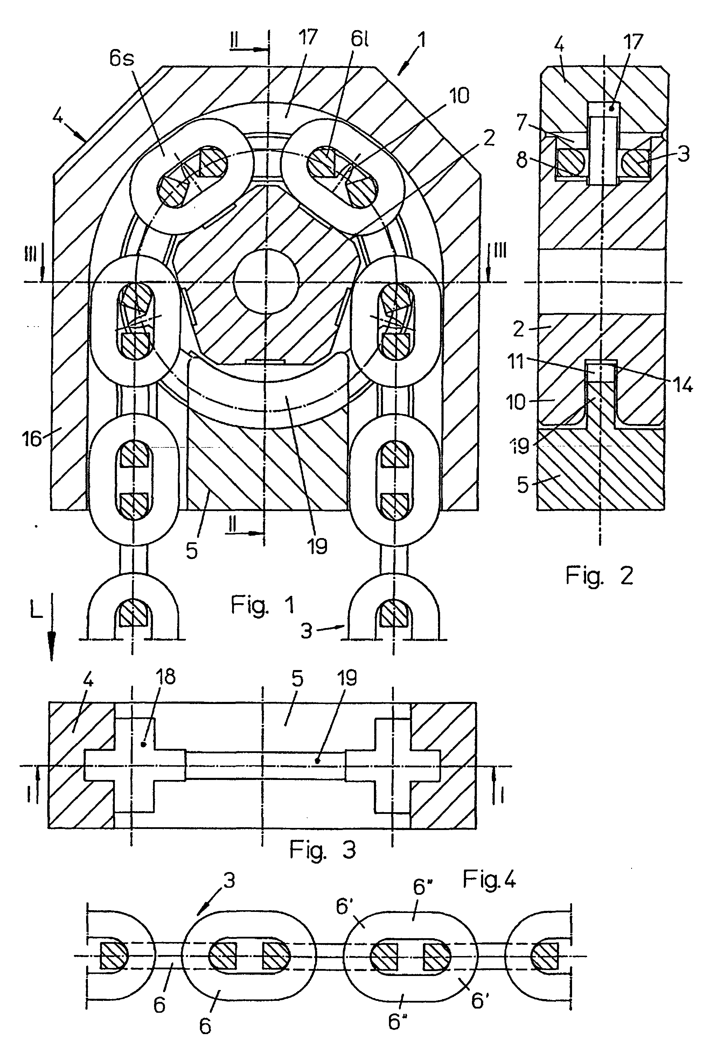

Der in den Fig. 1 bis 3 gezeigte Kettentrieb 1, der für ein Hebezeug bestimmt ist, weist ein Kettenrad 2, eine Kette 3, eine Kettenführung 4 sowie einen Abstreifer 5 auf, wobei Details des Kettenrades 2 auch in den Fig. 2 sowie Fig. 5 bis 9 gezeigt sind.

Zunächst sei die verwendete Kette 3, eine sogenannte Profilstahlkette, anhand der Fig. 4 näher erläutert. Die Glieder 6 der Kette 3 sind in gleicher Weise wie Glieder einer üblichen Rundstahlkette oval und im Einsatz abwechselnd um 90° verdreht. In Fig. 1 sind dementsprechend die im Kettenrad 2 stehenden Glieder mit 6s und die liegenden Glieder mit 61 bezeichnet.

Der Drahtquerschnitt der Kettenglieder 6 ist ein Rechteck, an welches eine zum Gliedinneren weisende Rundung, z.B. in Form eines Kreissegmentes anschließt, wobei bevorzugt die Rundung ein Halbkreis ist. Jedes Kettenglied 6 besitzt zwei halbkreisförmige Buge 6', an die gerade Schenkel 6" anschließen. Die Kettenteilung beträgt vorzugsweise das Dreifache der Drahtstärke bzw. -dicke, und die Kette selbst ist bevorzugt aus einsatzgehärtetem oder vergütetem Stahl hergestellt.

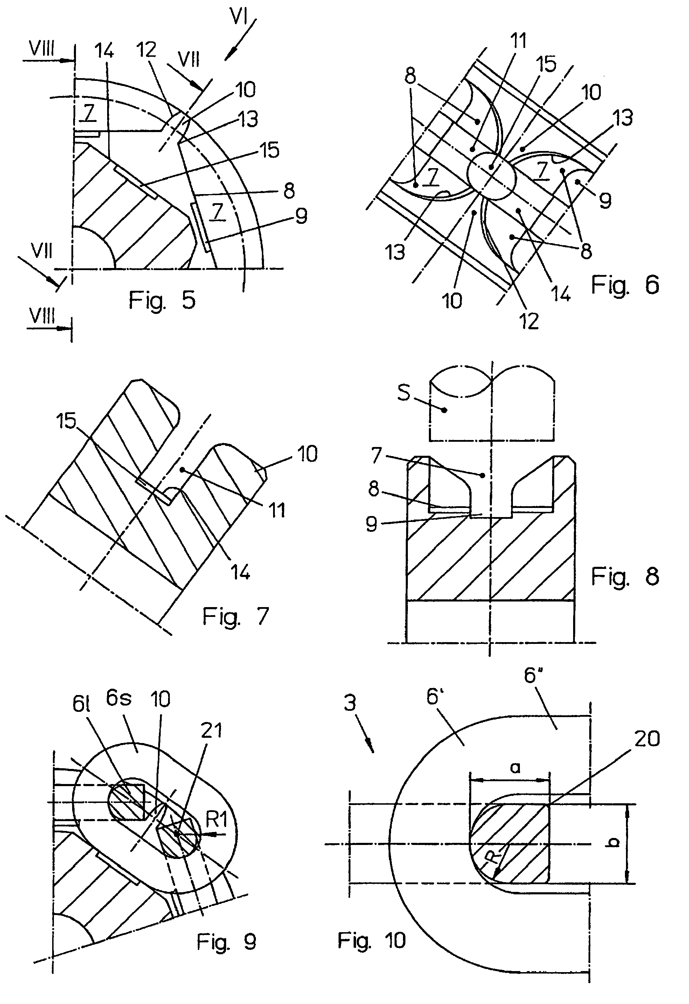

Zwei benachbarte, um 90° gegeneinander verdrehte Glieder 6 berühren einander mit den Innenrundungen ihrer Buge, wobei es theoretisch nur zu einer linien- oder gar nur parallelförmigen Berührung kommt. Um die dadurch bedingte hohe Auflagepressung zu vermeiden, ist die Rundung in einer solchen Weise an den Krümmungsradius im Bug der Glieder angepaßt, wobei berücksichtigt wird, daß sich der Krümmungsradius der inneren Kettenrundung bei Belastung der Kette ändert, nämlich im Sinne einer Verringerung, und daß im Lastfall die Rundung keinen größeren Radius aufweisen soll, als der Krümmungsradius der inneren Kettenrundung. Insbesondere ist der Radius R der Rundung sowohl im belasteten als auch im unbelasteten Zustand der Kette kleiner als der Radius R1 des Buges 6' der Glieder 6 (siehe Fig. 9 und 10). Unter "Rundung" des Drahtquerschnittes soll auch eine polygonale, jedoch immer wieder abgerundete Form verstanden werden, die ein Anliegen an mehreren Bereichen der Buginnenseite ermöglicht.

Wie gleichfalls aus Fig. 10 hervorgeht, ist bei einer bevorzugten Ausführungsform der Radius R der Rundung im wesentlichen gleich der Hälfte der Rechteckseite 6, somit b/2 = R, sodaß a = b, wenn a die Abmessung des Gliedprofiles zwischen der Rechteckbasis und dem Scheitel des Kreissegmentes ist.

Das Kettenrad 2 nach der Erfindung ist ein sogenanntes Taschenkettenrad. Es besitzt demnach Taschen 7, die der ovalen Gliedform angepaßt sind und die eine im wesentlichen plane Auflagefläche 8 (Taschenboden) besitzen. In der Längsmitte der Taschen 7 können Vertiefungen 9 ausgebildet sein, die dazu dienen, einen allfälligen Schweißwulst (nicht gezeigt) um einen Schenkel 6" des Kettengliedes 6 aufzunehmen, damit das Glied 6 auch bei Vorhandensein eines solchen Schweißwulstes auf der Auflagefläche 8 ebenflächig aufliegen kann.

Die Taschen 7 des Kettenrades 2 sind beiderseits von Zähnen 10 begrenzt, wobei jeder Zahn 10 durch eine Rille 11 zur Aufnahme der stehenden Glieder 6s in der Mittenebene des Kettenrades 2 geteilt ist, sodaß man auch von Doppelzähnen sprechen kann. Im vorliegenden Ausführungsbeispiel ist ein pentagonales Kettenrad 2 mit fünf solchen Zähnen 10 oder Doppelzähnen und dementsprechend mit fünf Taschen gezeigt, doch ist es klar, daß das Kettenrad in bekannter Weise auch eine größere und kleinere Anzahl von Zähnen 10 besitzen kann.

Die konvexen Flanken 12 der Zähne 10 (Fig. 5, 6) gehen ohne einen gerundeten, z.B. konkaven Übergangsbereich unmittelbar in die planen Auflageflächen 8 über, sodaß sich eine ausgeprägte Übergangskante 13 ergibt, deren Form klar aus Fig. 6 hervorgeht. In dem vorzugsweise eben ausgebildeten Boden 14 der Rillen 11 für die stehenden Glieder ist bei diesem Ausführungsbeispiel zwischen den Zähnen 10 eine Eintiefung 15 ausgenommen, die dem gleichen Zweck dient, wie der Vertiefung 9, nämlich der Aufnahme eines allfälligen Schweißwulstes (nicht gezeigt) des stehenden Gliedes 6s, damit dieses mit der ebenen Außenseite seines inneren Schenkels ebenflächig auf dem Rillenboden 14 aufliegen bzw. sich abstützen kann. Das Abstützen der stehenden Glieder 6s am Rillenboden 14 ist nämlich für die Funktion des Kettentriebes- bzw. Rades von großer Bedeutung, da sich die liegenden Glieder beim Einschwenkvorgang ihrerseits an den stehenden abstützen. Anderenfalls würden die Kanten der liegenden Glieder beim Einschwenken in das Kettenrad in die Auflageflächen 8 "einschneiden".

Wie aus Fig. 1 hervorgeht, sind dank der Erfindung sowohl die liegenden Glieder 61 als auch die stehenden Glieder 6s flächig abgestützt, nämlich die liegenden Glieder 61 mit einem Großteil ihrer Seitenflächen an der Auflagefläche 8 der Taschen 7 und die stehenden Glieder 6s mit der Außenfläche des innen liegenden Schenkels an dem Rillenboden 14.

Bei dem in den Fig. 1 bis 3 dargestellten Kettentrieb 1 umgibt die Kettenführung 4 das Ketten rad 2 über einen Umschlingungswinkel von 180°, um sich dann tangential in parallelen Endstücken 16 fortzusetzen. In der solcherart ausgebildeten Führung 4 ist eine Führungsrille 17 mit rechteckigem, dem Gliedprofil angepaßten Querschnitt ausgebildet, in welcher die stehenden Glieder 6s mit ihren Außenschenkeln und einem Teil ihrer Buge während des Umlaufes abgestützt sind.

Der gleichfalls aus den Fig. 1 bis 3 ersichtliche Abstreifer 5 besitzt eine Führungsrille 18 sowohl für die stehenden als auch für die liegenden Glieder der Kette 3, wobei auch diese Führungsrille in ihrem Querschnitt dem Gliedprofil angepaßt ist, sodaß sich sowohl an dem Abstreifer 5 als auch an der Kettenführung 4 eine flächige Abstützung der Kettenglieder ergibt, wobei zu bemerken ist, daß die Kettenführung wegen der bereits sehr guten Abstützung der Kettenglieder 6 in dem Kettenrad 2 wenig belastet wird.

Der Abstreifer 5 besitzt in bekannter Weise eine Abstreifnase 19, die sich bis in die Rille 11 des Kettenrades 2 erstreckt, und der im wesentlichen jenen Bereich des Kettenrades abdeckt, der von der Kette 3 frei ist.

In Fig. 1 ist die Lastseite mit einem Pfeil L bezeichnet. Bei Last liegen dann die liegenden Kettenglieder 61 mit den Kanten ihrer - in der Fig. 1 linken - Buge an den Übergangskanten 13 zwischen Zahnflanken 12 und Auflagefläche 8 an, wogegen die jeweils anderen Buge - in der Zeichnung die rechten - mit ihren Kanten in einem geringen Abstand von den Übergangskanten 13 liegen.

Die Erfindung führt auch dazu, daß bei gleichen äußeren Abmessungen der Kette und des Kettentriebes die spezifische Tragspannung der Kette reduziert wird, was zu einer entsprechend höheren Sicherheit führt. Man kann dementsprechend auch bei gleicher Sicherheit zu einer Verringerung der Abmessungen und des Materialbedarfs gelangen.

Das Kettenrad 2 kann, ebenso wie die Führung 4 und der Abstreifer 5 aus Stahl, z.B. vergütet, bestehen, doch kann hier gegebenenfalls die Verwendung von entsprechend festen und/oder verstärkten Kunststoffen angebracht sein. Zur Bearbeitung eines Kettenrades nach der Erfindung auf Stahl, insbesondere zur Herstellung der ebenen Taschenböden, können handelsübliche Schaftfräser S (in Fig. 8 angedeutet) Verwendung finden; teure Fräsvorgänge mit Profilfräsern, wie bei dem Querschnitt von Rundstahlgliedern angepaßten Taschenböden bekannter Kettenräder sind nicht erforderlich.

## Patentansprüche

1. Kettenrad (2) für Kettentriebe mit einer Kette, die aus ovalen, abwechselnd um 90° gegeneinander verdrehten, stehenden und liegenden Gliedern besteht, mit im wesentlichen plane Auflageflächen (8) besitzenden Taschen (7) zur Aufnahme der liegenden Glieder (61) und mit Zähnen (10) zur Abstützung der liegenden Glieder mit ihren Bugen (6'), wobei die Zähne konvexe Flanken (12) aufweisen und die stehenden Glieder (6s) in einer Rille (11) zwischen den Zähnen aufgenommen sind,
wobei
die konvexen Flanken (12) und die planen Auflageflächen (8) im wesentlichen unmittelbar, d.h. längs einer Übergangskante (13), aneinanderstoßen,
**dadurch gekennzeichnet, daß** die Rille (11) plane Auflageflächen (14) zum Abstützen der stehenden Glieder (6s) aufweist.

2. Verwendung einer Kette (3) bestehend aus ovalen, im Einsatz gegeneinander abwechselnd um 90° verdrehten Gliedern in einem Kettentrieb (1) mit einem Taschen-Kettenrad (2)
**dadurch gekennzeichnet, daß**
der Drahtquerschnitt der Kettenglieder (6) ein Rechteck mit einer daran zum Gliedinneren hin anschließenden Rundung ist, und die Glieder (6l, 6s) mit ihren Seiten- und Außenflächen sich im wesentlichen vollflächig an planen Auflageflächen (8 und 14) in Kettentaschen (7) und im einer Rille (11) des Kettenrads (2) abstützen.

3. Verwendung einer Kette (3) nach Anspruch 2, **dadurch gekennzeichnet, dass** der Radius (R) der Rundung sowohl im belasteten als auch im unbelasteten Zustand der Kette kleiner ist als der Innenradius (R1) des Buges (6') der Glieder (6).

4. Verwendung einer Kette (3) nach Anspruch 2 oder 3, **dadurch gekennzeichnet, daß** der Radius (R) der Rundung im wesentlichen gleich ist der halben Längsseite (b) des Rechtecks.

5. Verwendung einer Kette (3) nach einem der Ansprüche 2 bis 4, **dadurch gekennzeichnet, daß** die Rundung ein Kreissegment ist.

6. Verwendung einer Kette (3) nach einem der Ansprüche 2 bis 5, **dadurch gekennzeichnet, daß** an die Buge (6') der Kettenglieder gerade Schenkel (6") anschließen.

7. Verwendung einer Kette (3) nach einem der Ansprüche 2 bis 6, **dadurch gekennzeichnet, daß** das Verhältnis Teilung zu Drahtstärke etwa 3 : 1 beträgt.

8. Kettentrieb (1), insbesondere für Hebezeuge, mit einer um ein Kettenrad (2) umlaufenden Kette (3), deren ovale, abwechselnd um 90° verdrehte Glieder (6) als stehende und liegende Glieder mit dem Kettenrad in Wechselwirkung stehen, wobei die liegenden Glieder (61) in Taschen (7) des Kettenrades mit im wesentlichen planen Auflageflächen (8) aufgenommen und mit ihren Bugen (6') an konvexe Flanken (12) aüfweisenden Zähnen (10) abstützbar sind und die stehenden Glieder (6s) in einer Rille (11) zwischen den Zähnen stehen,
**dadurch gekennzeichnet, daß**
der Drahtquerschnitt der Kettenglieder (6) ein Rechteck mit einer daran zum Gliedinneren hin anschließenden Rundung ist, die konvexen Flanken (12) und die planen Auflageflächen (8) im wesentlichen unmittelbar, d.h. längs einer Übergangskante (13) aneinanderstoßen, sodaß sich die liegenden Glieder (61) sowie die stehenden Glieder (6s) im wesentlichen vollflächig an planen Auflageflächen (8 und 14) der Kettentaschen (7) und der Rille (11) abstützen können, wobei jedes liegende Glied (61) mit der Kante eines Buges (6') bis an die Übergangskante (13) gelangen kann.

9. Kettentrieb (1) nach Anspruch 8, **dadurch gekennzeichnet, daß der Radius (R) der Run**dung sowohl im belasteten als auch im unbelasteten Zustand der Kette kleiner ist als der Innenradius (R1) des Buges (6') der Glieder (6).

10. Kettentrieb (1) nach Anspruch 8 oder 9, **dadurch gekennzeichnet, daß** der Radius (R) der Rundung im wesentlichen gleich ist der halben Längsseite (b) des Rechtecks.

11. Kettentrieb (1) nach Anspruch 10, **dadurch gekennzeichnet, daß** dem Kettenrad (2) eine dieses zumindest über einen bestimmten Umschlingungswinkel umgebende Führung (4) zugeordnet ist, in welcher eine Führungsrille (17) fiir die Abstützung der Außenbereiche der stehenden Glieder (6s) ausgebildet ist, die rechteckigen Querschnitt aufweist.

12. Kettentrieb nach Anspruch 11, **dadurch gekennzeichnet, daß** sich die Führung (4) und die Führungsrille (18) nach dem Umschlingungswinkel in tangentialen Endstücken (16) fortsetzen.

13. Kettentrieb (1) nach Anspruch 12, **dadurch gekennzeichnet, daß** zwischen den Endstücken (16) ein Abstreifer (5) vorgesehen ist, der eine in ihrem Querschnitt dem Gliedprofil angepaßte Führungsrille (18) sowohl für den Innenschenkel der stehenden Glieder als auch für die liegenden Glieder aufweist.

## Claims

1. Chain wheel (2) for chain drives with a chain, which consists of oval, vertical and horizontal links which are rotated in an alternate manner about 90°, the chain wheel having pockets (7), which comprise substantially planar support surfaces (8), for receiving the horizontal links (61), and having teeth (10) for supporting the horizontal links with their curved ends (6'), wherein the teeth comprise convex flanks (12) and the vertical links (6s) are received in a groove (11) between the teeth, wherein the convex flanks (12) and the planar support surfaces (8) contact each other in a substantially direct manner, i.e. along a transition edge (13),
**characterized in that**
the groove (11) comprises planar support surfaces (14) for supporting the vertical links (6s).

2. Use of a chain (3) consisting of oval links which are, in operation, rotated in an alternate manner about 90°, in a chain drive (1) with a pocket chain wheel (2)
**characterized in that**
the wire cross-section of the chain links (6) is a rectangle with a curvature adjoined thereto towards the inner part of the link, and the links (61,6s) are, on their side or outer surfaces, supported over substantially the entire area by planar support surfaces (8 and 14) in chain pockets (7) and in a groove (11) of the chain wheel (2).

3. Use of a chain (3) according to claim 2, **characterized in that** the radius (R) of the curvature is smaller than the radius (R1) of the curved end (6') of the links (6) both in the loaded and unloaded state of the chain.

4. Use of a chain (3) according to claim 2 or 3, **characterized in that** the radius (R) of the curvature is substantially equal to half the longitudinal side (b) of the rectangle.

5. Use of a chain (3) according to one of claims 2 to 4, **characterized in that** the curvature is a segment of a circle.

6. Use of a chain (3) according to one of claims 2 to 5, **characterized in that** straight limbs (6") adjoin the curved ends (6') of the chain links.

7. Use of a chain (3) according to one of claims 2 to 6, **characterized in that** the ratio of pitch to wire strength is approximately 3:1.

8. Chain drive (1), in particular for lifting devices, comprising a chain (3) rotating about a chain wheel (2), the oval links (6) of the chain being rotated in an alternate manner about 90° and interacting as vertical and horizontal links with the chain wheel, wherein the horizontal links (61) are received in pockets (7) of the chain wheel with substantially planar support surfaces (8) and can be supported with their curved ends (6') on teeth (10) comprising convex flanks (12), and the vertical links (6s) are positioned in a groove (11) between the teeth,
**characterized in that**
the wire cross-section of the chain links (6) is a rectangle with a curvature adjoined thereto towards the inner part of the link, the convex flanks (12) and the planar support surfaces (8) contact each other in a substantially direct manner, i.e. along a transition edge (13), so the horizontal links (61) and the vertical links (6s) can be supported over substantially the entire area by planar support surfaces (8 and 14) of the chain pockets (7) and the groove (11), wherein each horizontal link (61) can reach with the edge of a curved end (6') as far as the transition edge (13).

9. Chain drive (1) according to claim 8, **characterized in that** the radius (R) of the curvature is smaller than the radius (R1) of the curved end (6') of the links (6) both in the loaded and unloaded state of the chain.

10. Chain drive (1) according to claim 8 or 9, **characterized in that** the radius (R) of the curvature is substantially equal to half the longitudinal side (b) of the rectangle.

11. Chain drive (1) according to claim 10, **characterized in that** the chain wheel (2) is allocated a guide (4) which surrounds said chain wheel at least at a predetermined looping angle and in which a guide channel (17), having a rectangular cross-section, is formed for supporting the outer regions of the vertical links (6s).

12. Chain drive (1) according to claim 11, **characterized in that** the guide (4) and the guide channel (18) continue in tangential end pieces (16) after the looping angle.

13. Chain drive (1) according to claim 12, **characterized in that** between the end pieces (16) there is provided a stripper (5), which comprises a guide channel (18) adapted in its cross-section to the link profile, both for the inner limb of the vertical links and for the horizontal links.

## Revendications

1. Roue à chaîne (2) pour des dispositifs d'entraînement à chaîne comportant une chaîne qui est constituée par des maillons ovales, verticaux et horizontaux, qui sont pivotés alternativement de 90° entre eux, des logements (7) possédant des surfaces d'appui essentiellement planes (8) et servant à recevoir les maillons allongés horizontaux (61), et des dents (10) servant à supporter les maillons allongés au moyen de leurs parties avant (6'), les dents possédant des flancs convexes (12) et les maillons verticaux (6s) étant logés dans une rainure (11) présents entre les dents, et dans laquelle les flancs convexes (12) et les surfaces d'application planes (8) sont en aboutement les uns contre les autres essentiellement directement, c'est-à-dire le long d'un bord de jonction (13),
**caractérisé en ce que** la rainure (11) comporte des surfaces d'application planes (14) servant à supporter les maillons verticaux (6s).

2. Utilisation d'une chaîne (3) constituée par des maillons ovales, qui sont pivotés alternativement de 90° les uns par rapports aux autres en cours d'utilisation, dans un dispositif d'entraînement à chaîne (1) comportant une roue à chaîne (2) à logements, **caractérisée en ce que** la section transversale du fil des maillons (6) de la chaîne est un rectangle comportant un arrondi qui se raccorde à ce rectangle en direction de l'intérieur des maillons, et que les maillons (61, 6s) prennent appui par leurs faces latérales et leurs faces extérieures, essentiellement sur toute leur surface sur des surfaces d'application planes (8 et 14) formées dans les logements (7) de la chaîne et dans une rainure (11) de la roue à chaîne (2).

3. Utilisation d'une chaîne (3) selon la revendication 2, **caractérisée en ce que** le rayon (R) de l'arrondi aussi bien lorsque la chaîne est à l'état chargé qu'à l'état déchargé, est inférieure au rayon intérieur (1) de la partie avant (6') des maillons (6).

4. Utilisation d'une chaîne (3) selon la revendication 2 ou 3, **caractérisée en ce que** le rayon (R) de l'arrondi est essentiellement égal à la moitié du côté longitudinal (b) du rectangle.

5. Utilisation d'une chaîne (3) selon l'une des revendications 2 à 4, **caractérisée en ce que** l'arrondi est un segment de cercle.

6. Utilisation d'une chaîne (3) selon l'une des revendications 2 à 5, **caractérisée en ce que** des branches rectilignes (6") se raccordent aux parties avant (6') des maillons de la chaîne.

7. Utilisation d'une chaîne (3) selon l'une des revendications 2 à 6, **caractérisée en ce que** le rapport du pas à l'épaisseur du fil est égal à environ 3:1.

8. Dispositif d'entraînement à chaîne (1), notamment pour des engins de levage, comportant une chaîne (3) dont les maillons ovales (6) pivotés alternativement de 90° coopèrent en tant que maillons verticaux et horizontaux avec la roue à chaîne, les maillons horizontaux (61) étant reçus dans les logements de l'arbre à chaîne comportant des surfaces d'application essentiellement planes (8) tandis que leurs parties avant (6') peuvent être supportées par des dents (10) possédant des flancs convexes (12), et que les maillons verticaux (6s) sont situés dans une rainure (11) située entre les dents, **caractérisé en ce que** la section transversale du fil des maillons (6) de la chaîne est un rectangle auquel se raccorde un arrondi en direction de l'intérieur des maillons, les flancs convexes (12) et les surfaces d'application planes (8) sont en aboutement essentiellement directement, c'est-à-dire le long d'un bord de jonction (13) de sorte que les maillons horizontaux (61) ainsi que les maillons verticaux (6s) peuvent prendre appui essentiellement sur plusieurs surfaces sur des surfaces d'appui planes (8 et 14) des poches (7) de la chaîne et dans la rainure (11), chaque maillon allongé horizontal (61) pouvant s'étendre, par le bord d'une partie avant (6') jusqu'au niveau du bord de jonction (13).

9. Dispositif d'entraînement à chaîne (1) selon la revendication 8, **caractérisé en ce que** le rayon (R) de l'arrondi est inférieur au rayon intérieur (R1) de la partie avant (6') des maillons (6), aussi bien lorsque la chaîne est à l'état chargé qu'à l'état déchargé.

10. Dispositif d'entraînement à chaîne (1) selon la revendication 8 ou 9, **caractérisée en ce que** le rayon (R) de l'arrondi est essentiellement égal à la moitié de la longueur du grand côté (b) du rectangle.

11. Dispositif d'entraînement à chaîne (1) selon la revendication 10, **caractérisé en ce qu'**à la roue à chaîne (2) est associé un guide (4), qui entoure la roue à chaîne au moins sur un angle déterminé d'enroulement et dans lequel est formé une rainure de guidage (17) pour le soutien des parties extérieures des maillons verticaux (6s), cette rainure possédant la section transversale rectangulaire.

12. Dispositif d'entraînement à chaîne (1) selon la revendication 11, **caractérisé en ce que** le guide (4) et la rainure de guidage (18) se prolongent, au-delà de l'angle d'enroulement, par des éléments d'extrémité tangentiels (16).

13. Dispositif d'entraînement à chaîne (1) selon la revendication 12, **caractérisé en ce qu'**entre les éléments d'extrémité (16) est prévu un racloir (5), qui possède une rainure de guidage (18), dont la section transversale est adaptée au profil du maillon, aussi bien pour la branche intérieure des maillons verticaux que pour les maillons horizontaux.
